# EUROPÄISCHE PATENTSCHRIFT

(11) **EP 2 383 672 B1**
(45) Veröffentlichungstag und Bekanntmachung des Hinweises auf die Patenterteilung: **10.10.2018**
(21) Anmeldenummer: 11003948.4
(22) Anmeldetag: 11.08.2009
(51) Int. Cl.: G06F 21/00, H04L 29/06, G06F 21/33, G06F 21/34, G06F 21/44, G06Q 20/38, G07F 7/10, H04L 9/32

(54) **Einmalpasswort-Generator**
One-time-password generator
GENERATEUR DE MOT DE PASSE A UTILISATION UNIQUE

(30) Priorität: 14.08.2008 DE 102008037794
(43) Veröffentlichungstag der Anmeldung: 02.11.2011
(62) Teilanmeldung aus: 09010334.2
(73) Patentinhaber: Giesecke+Devrient Mobile Security GmbH, 81677 München (DE)
(72) Erfinder: Krysiak, Ralph, 85570 Markt Schwaben (DE)

(56) Entgegenhaltungen:
- EP-A1- 1 713 230
- WO-A1-2005/116909
- US-A- 5 432 851
- US-A1- 2004 148 510
- OPPLIGER R ET AL: "SSL/TLS Session-Aware User Authentication", COMPUTER, IEEE SERVICE CENTER, LOS ALAMITOS, CA, US, Bd. 40, Nr. 3, 1. März 2008 (2008-03-01), Seiten 59-65, XP011206550, ISSN: 0018-9162

## Beschreibung

Die Erfindung betrifft ein Verfahren zum Personalisieren eines Einmalpasswort-Generators sowie einen entsprechenden Einmalpasswort-Generator.

Ein Einmalpasswort (auch "OTP" genannt, vom engl. "One Time Password") ist ein Passwort oder allgemeiner ein Datensatz, der zum einmaligen Authentisieren eines Nutzers oder eines Systems für eine Datenkommunikation benutzt wird. Einmalpasswörter werden beispielsweise benutzt, um Transaktionen beim Online-Banking zu verschlüsseln. Ein Einmalpasswort hat, wie der Begriff bereits andeutet, nur für eine Authentisierung Gültigkeit und kann danach nicht mehr verwendet werden, so dass ein Nutzer beispielsweise für jede neue Überweisung über ein Online-Banking-System ein neues Einmalpasswort benötigt.

Neben der Möglichkeit, eine Reihe von Einmalpasswörtern vorab zu erzeugen und dem Nutzer auszuhändigen, wie z.B. bei den aus dem Online-Banking bekannten Transaktionsnummern-Listen, ist es auch bekannt, einen Nutzer mit einem Gerät zum Erzeugen und gegebenenfalls Anzeigen von Einmalpasswörtern, einem so genannten Einmalpasswort-Generator bzw. OTP-Generator, auszustatten. OTP-Generatoren sind meist als kleine, handliche Geräte ausgebildet, beispielsweise als Chipkarten, und können daher von einem Nutzer einfach mitgeführt werden. Derartige OTP-Generatoren bergen bei Verlust weniger Gefahren als Listen von vorab generierten Einmalpasswörtern, da OTP-Generatoren zusätzlich gesichert werden können, beispielsweise durch ein Passwort oder dergleichen.

Um einen Authentisierungsvorgang zusätzlich gegen Angriffe zu sichern, beispielsweise gegen einen so genannten "Man in the Middle"-Angriff, bei dem ein Angreifer die Datenkommunikation zwischen zwei Parteien abhört und sich jeweils gegenüber der einen Partei als die jeweils andere Partei ausgibt, ist es bekannt, Einmalpasswörter, die beispielsweise in "Challenge-Response"-Verfahren auf Client-Seite zum Verschlüsseln eines von einem Server erhaltenen Datensatzes, der "Challenge", benutzt werden, abhängig von dem zu verschlüsselnden Datensatz zu erzeugen. Dazu muss einem eingesetzten OTP-Generator dieser Datensatz eingegeben werden. Dies kann manuell durch den Nutzer geschehen, beispielsweise über eine Tastatureingabe, oder über eine Kopplung des OTP-Generators mit einem an der Datenkommunikation beteiligten Kommunikationsgerät, beispielsweise einem Personal Computer (PC), wozu jedoch meist eine spezielle Installation des OTP-Generators in dem den PC steuernden System notwendig ist. Deshalb ist es wünschenswert, einen OTP-Generator bereitzustellen, der in verschiedenen Umgebungen direkt einsetzbar ist, also beispielsweise ohne vorausgehende Installation in einem zu benutzenden System, und für den Nutzer einfach zu bedienen ist, also beispielsweise ohne fehlerträchtige manuelle Eingabe von Datensätzen.
Die EP 1 211 841 B1 offenbart ein Gerät zum elektronischen Signieren von Daten, welches eine optische Eingabeeinheit zum Auslesen von zu signierenden Daten von einem Bildschirm oder dergleichen umfasst sowie eine Tastatur zur Interaktion mit einem Nutzer, eine Signiereinheit zum Signieren der aufgenommenen Daten und eine Anzeigeeinheit zum Anzeigen ausgelesener wie auch signierter Daten. Die Stand der Technik Dokumente XP011206550 mit dem Titel "SSL/TLS Session-Aware User Authentication", EP1713230, US5432851, US 2004/148510 und WO200511690 offenbaren OTP Generatoren zur Authentifizierung eines Nutzers gegenüber einem Server, wobei nur der Server eingerichtet ist, eine Zufallszahl zum Authentifizieren, zu generieren. Vor einem ersten Einsatz eines OTP-Generators muss dieser jedoch auf einen bestimmten Nutzer personalisiert werden, d.h. eindeutig mit Kennungsdaten des Nutzers in Verbindung gebracht werden, um von einem Anwendungssystem, mit welchem der Nutzer kommuniziert (also beispielsweise einem Online-Banking-System), als OTP-Generator dieses Nutzers erkannt zu werden. Dies kann z.B. durch Einbringen von nutzerspezifischen Daten in den OTP-Generator erfolgen, welche gleichzeitig auf dem Anwendungssystem mit dem Nutzer verknüpft sind, beispielsweise ein eindeutig dem Nutzer zugeordneter geheimer Schlüssel.

Eine solche Personalisierung eines OTP-Generators bereits während dessen Herstellung erfordert jedoch hohe und damit kostenintensive Sicherheitsmaßnahmen, da die nutzerspezifischen geheimen Schlüssel kryptographisch gesichert in den entsprechenden OTP-Generator eingebracht werden müssen. Wird die Personalisierung erst nach Auslieferung des OTP-Generators durch dessen Nutzer durchgeführt, so birgt dies weitere Sicherheitsrisiken, beispielsweise durch den notwendigen Austausch von Personalisierungsdaten mit dem Anwendungssystem oder auf einem System des Nutzers befindlichen Schadcode.

Demzufolge ist es die Aufgabe der vorliegenden Erfindung, eine sichere und einfache Personalisierung eines OTP-Generators auf einen Nutzer vorzuschlagen.

Diese Aufgabe wird durch ein Verfahren und einen OTP-Generator mit den Merkmalen der unabhängigen Ansprüche gelöst. In davon abhängigen Ansprüchen werden vorteilhafte Ausgestaltungen und Weiterbildungen angegeben.

Erfindungsgemäß empfängt das Anwendungssystem zumindest Kennungsdaten des Nutzers und Identifikationsdaten des OTP-Generators, die jeweils den Nutzer und den OTP-Generator eindeutig identifizieren. Daneben kann das Anwendungssystem aber auch weitere Daten empfangen. Aus einer Teilmenge oder sämtlichen empfangenen Daten bildet das Anwendungssystem daraufhin mittels eines auf dem Anwendungssystem vorliegenden ersten geheimen Schlüssels erste verschlüsselte Daten und sendet zumindest diese ersten verschlüsselten Daten an den OTP-Generator, der diese empfangenen verschlüsselten Daten mittels des auch auf dem OTP-Generator vorliegenden ersten geheimen Schlüssels verifiziert. Zusammen mit diesen ersten verschlüsselten Daten kann das Anwendungssystem auch weitere Daten an den OTP-Generator senden.

Sofern die ersten verschlüsselten Daten von dem OTP-Generator erfolgreich verifiziert werden konnten, bildet dieser zweite verschlüsselte Daten aus von dem Anwendungssystem empfangenen Daten mittels eines auf dem OTP-Generator vorliegenden zweiten geheimen Schlüssels. Zumindest diese zweiten verschlüsselten Daten werden dann zurück an das Anwendungssystem gesendet und von dem Anwendungssystem mittels des zweiten geheimen Schlüssels, der ebenfalls auf dem Anwendungssystem vorliegt, verifiziert.

Sofern die zweiten verschlüsselten Daten von dem Anwendungssystem erfolgreich verifiziert werden konnten, führt das Anwendungssystem die eigentliche Personalisierung des OTP-Generators auf den Nutzer durch, indem die Kennungsdaten des Nutzers und die Identifikationsdaten des OTP-Generators verknüpft werden.

Das Anwendungssystem leitet im Rahmen der oben geschilderten Personalisierung den ersten geheimen Schlüssel mittels eines dem Anwendungssystem vorliegenden ersten geheimen Hauptschlüssels und den zweiten geheimen Schlüssel mittels eines dem Anwendungssystem vorliegenden zweiten geheimen Hauptschlüssels jeweils aus den anfangs empfangenen Identifikationsdaten des OTP-Generators ab.

Auf diese Weise ist es möglich, den OTP-Generator einfach und sicher auf den Nutzer zu personalisieren. Da bei der Herstellung keine nutzerspezifischen Daten in den OTP-Generator eingebracht werden müssen, kann dieser einerseits ohne größere Sicherheitsanforderungen hergestellt werden, weil zum Herstellungszeitpunkt noch nicht festzustehen braucht, an welchen Nutzer der jeweilige OTP-Generator ausgeliefert wird. Auch eine Auslieferung an den Nutzer ist problemlos und ohne großen logistischen Aufwand möglich, da ein OTP-Generator mit beliebigen Identifikationsdaten an jeden potentiellen Nutzer ausgeliefert werden kann, ohne dass eine bereits bestehende Bindung des Nutzers an die Identifikationsdaten zu beachten wäre.

Da andererseits auch zu keinem späteren Zeitpunkt ein Einbringen von nutzerspezifischen Daten in den OTP-Generator, beispielsweise durch Einspielen, Herunterladen oder dergleichen, notwendig ist, ist ein böswilliger Zugriff auf etwaige geheime Personalisierungsdaten grundsätzlich ausgeschlossen.

Das Anwendungssystem kann beim Empfangen der Identifikationsdaten den ersten und zweiten geheimen Schlüssel mittels der entsprechenden Hauptschlüssel ableiten, muss also erst zum Zeitpunkt der Personalisierung des OTP-Generators Daten speichern, die zur Personalisierung des OTP-Generators auf den Nutzer benötigt werden. Eine Verknüpfung der Identifikationsdaten des OTP-Generators mit bereits vor dem Personalisierungsvorgang in dem Anwendungssystem vorliegenden Kennungsdaten des Nutzers ist dazu ausreichend. Das Senden der Kennungsdaten des Nutzers an das Anwendungssystem dient dazu, dem Anwendungssystem anzuzeigen, für welchen der dem Anwendungssystem bereits bekannten Nutzer der OTP-Generator personalisiert werden soll. Noch nicht personalisierte, aber bereits hergestellte und ausgelieferte OTP-Generatoren belasten somit das Anwendungssystem in keiner Weise, da für diese im Anwendungssystem bis zu diesem Zeitpunkt keinerlei Daten gespeichert werden müssen.

Auf Seiten des OTP-Generators werden die ersten verschlüsselten Daten, die gebildet werden, indem das Anwendungssystem von dem OTP-Generator empfange Daten verschlüsselt und an den OTP-Generator sendet, verifiziert. Dadurch wird festgestellt, ob der Kommunikationspartner, der sich während des Personalisierungsvorgangs als das Anwendungssystem ausgibt, auch tatsächlich das Anwendungssystem ist, da nur das Anwendungssystem im Besitz des ersten geheimen Schlüssels sein kann.

Umgekehrt kann das Anwendungssystem in gleicher Weise sicherstellen, dass sein Kommunikationspartner tatsächlich der sich mit den Identifikationsdaten identifizierende OTP-Generator ist, indem an den Kommunikationspartner gesendete und von diesem verschlüsselt zurückgesendete Daten mit dem zweiten geheimen Schlüssel verifiziert werden. Eine solche Verifikation ist nur dann erfolgreich, wenn der Kommunikationspartner im Besitz des zweiten geheimen Schlüssels ist, es sich also genau um den OTP-Generator handelt. Nur dann wird von dem Anwendungssystem die Verknüpfung von Kennungsdaten des Nutzers, beispielsweise eines Nutzernamens in Verbindung mit einem Passwort, mit den Identifikationsdaten des OTP-Generators, beispielsweise einer eindeutigen Seriennummer, hergestellt. Das Anwendungssystem kann beispielsweise ein Online-Banking-System oder dergleichen sein.

Mit diesem Verfahren wird vorzugsweise der nachfolgend beschriebene OTP-Generator personalisiert. Ein solcher zu personalisierender OTP-Generator umfasst einen Prozessor und einen Speicher mit zumindest einem ersten und einem zweiten geheimen Schlüssel, die darin gespeichert sind. Eine optische Eingabeeinrichtung dient zum Auslesen von auf einer Monitoreinrichtung eines Kommunikationsgeräts angezeigten Daten. Das Kommunikationsgerät dient als Schnittstelle zwischen dem OTP-Generator und dem Anwendungssystem, bei welchem der OTP-Generator für einen Nutzer personalisiert wird. Eine Anzeigeeinrichtung dient dem OTP-Generator zum Anzeigen von Daten und eine Verifikationseinrichtung zum Vergleich von Vergleichsdaten mit in dem Speicher vorliegenden Referenzdaten. Mittels einer Kryptographieeinrichtung verschlüsselt und entschlüsselt der OTP-Generator Daten mittels des ersten und des zweiten geheimen Schlüssels. Im Rahmen des geschilderten Personalisierungsverfahrens entschlüsselt die Kryptographieeinrichtung des OTP-Generators die mit der optischen Eingabeeinrichtung ausgelesenen und von dem Anwendungssystem empfangenen ersten verschlüsselten Daten und legt diese zur Verifikation durch die Verifikationseinrichtung als Vergleichsdaten im Speicher ab. Die Kryptographieeinrichtung verschlüsselt die ersten verschlüsselten Daten auch mittels des zweiten geheimen Schlüssels, um diese als zweite verschlüsselte Daten auf der Anzeigeeinrichtung anzuzeigen. Die zweiten verschlüsselten Daten werden schließlich von dem Anwendungssystem verifiziert. Somit besitzt der OTP-Generator alle notwendigen Komponenten um mittels des vorstehend beschriebenen Verfahrens für einen Nutzer bei einem Anwendungssystem personalisiert zu werden.

Dieser OTP-Generator ist nicht direkt mit dem Anwendungssystem verbunden, sondern nutzt zum Datenaustausch mit dem Anwendungssystem ein mit diesem verbundenes Kommunikationsgerät als Schnittstelle. Das Kommunikationsgerät, beispielsweise ein PC, sendet für das Anwendungssystem bestimmte Daten des OTP-Generators an das Anwendungssystem und empfängt für den OTP-Generator bestimmte und von dem Anwendungssystem gesendete Daten. Der OTP-Generator ist also nicht physikalisch mit einem Netzwerk verbunden, wodurch die in dem OTP-Generator gespeicherten und erzeugten Daten zusätzlich gegen einen böswilligen Zugriff gesichert sind.

Bevorzugt werden die von dem Kommunikationsgerät empfangenen und für den OTP-Generator bestimmten Daten des Anwendungssystems auf einer Monitoreinrichtung des Kommunikationsgeräts, beispielsweise einem Flüssigkristallbildschirm oder dergleichen, angezeigt und mittels der optischen Eingabeeinrichtung des OTP-Generators von der Monitoreinrichtung ausgelesen. Auf diese Weise wird vermieden, dass der Nutzer Daten von Hand, beispielsweise über eine Tastatur, in den OTP-Generator eingeben muss, wodurch Zeit eingespart und Fehlerquellen vermindert werden. Der OTP-Generator muss auch nicht in dem das Kommunikationsgerät steuernden System installiert werden, da die Datenübertragung zwischen dem OTP-Generator und dem Kommunikationsgerät rein optisch stattfindet und keine zusätzlichen Kommunikationsapplikationen benötigt werden. Dadurch ist der OTP-Generator bei beliebigen Kommunikationsgeräten unmittelbar und problemlos einsetzbar.

Als optische Eingabeeinrichtung des OTP-Generators kann ein CCD-Zeilensensor ("Charge-Coupled Device", ladungsgekoppeltes Gerät) zum Auslesen von Daten eingesetzt werden, welche auf der Monitoreinrichtung beispielsweise als Laufschrift angezeigt werden, etwa mittels Flash animiert oder als dynamischer HTML-Inhalt. Auch ein optisch eindimensionaler Sensor, beispielsweise eine Photodiode, kann als optische Eingabeeinrichtung verwendet werden. In diesem Fall werden die Daten als binäre Daten und entsprechend codiert über einen entsprechend hell-dunkel gesteuerten Bereich der Monitoreinrichtung angezeigt. Zur Erhöhung der Datenübertragungsrate können parallel eine Mehrzahl von Photodioden verwendet werden.

Daten, die von dem OTP-Generator zu dem Anwendungssystem übertragen werden, werden über eine Anzeigeeinrichtung des OTP-Generators, beispielsweise ein Display, angezeigt und über eine Eingabeeinrichtung, beispielsweise eine Tastatur, dem Kommunikationsgerät zum Senden an das Anwendungssystem bereitgestellt. Auf diese Weise ist eine physikalische Kopplung des OTP-Generators mit dem Anwendungssystem nicht notwendig. Die Anzeigeeinrichtung kann weiterhin dazu dienen, über die vorstehend beschriebene optische Eingabeeinrichtung ausgelesene Daten zur Kontrolle anzuzeigen.

In einer bevorzugten Ausführungsform des erfindungsgemäßen Verfahrens sind der erste geheime Schlüssel und der zweite geheime Schlüssel voneinander verschiedene kryptographische Schlüssel und der erste geheime Hauptschlüssel und der zweite geheime Hauptschlüssel sind ebenfalls voneinander verschiedene kryptographische Hauptschlüssel und die zweiten verschlüsselten Daten werden gebildet, indem die von dem OTP-Generator empfangenen und mit dem ersten geheimen Schlüssel verschlüsselten ersten verschlüsselten Daten mittels des zweiten geheimen Schlüssels erneut verschlüsselt werden. Auf diese Weise wird das Personalisierungsverfahren einfach gehalten, da keine zusätzlichen Datensätze gespeichert und bearbeitet werden müssen.

Hierbei ist der zweite geheime Schlüssel vorzugsweise ein eindeutig nur genau dem OTP-Generator zugeordneter Schlüssel, während der erste geheime Schlüssel beispielsweise für die Kommunikation des Anwendungssystems mit einer Vielzahl von verschiedenen OTP-Generatoren verwendet werden kann, da der erste geheime Schlüssel, wie vorstehend beschrieben, im Wesentlichen zur Authentisierung des Anwendungssystem gegenüber dem OTP-Generator dient.

Es ist jedoch auch möglich, das Personalisierungsverfahren mit nur einem geheimen Schlüssel, der dann natürlich für jeden OTP-Generator individuell und verschieden sein muss, durchzuführen, d.h., der erste geheime Schlüssel und der zweite geheime Schlüssel können auch identische kryptographische Schlüssel sein und der erste geheime Hauptschlüssel und der zweite geheime Hauptschlüssel können auch identische kryptographische Hauptschlüssel sein. Es ist dann beispielsweise möglich, die zweiten verschlüsselten Daten durch Verschlüsseln von durch den OTP-Generator von dem Anwendungssystem empfangenen unverschlüsselten Daten mittels des kryptographischen Schlüssels zu bilden.

Die den OTP-Generator identifizierenden Identifikationsdaten sind vorzugsweise in dessen Speicher abgelegt und können auf der Anzeigeeinrichtung des OTP-Generators angezeigt werden. Die Identifikationsdaten können aber auch, beispielsweise in Form einer Seriennummer, äußerlich auf den OTP-Generator ablesbar aufgebracht sein, beispielsweise aufgedruckt.

Nach Empfang der Identifikationsdaten durch das Anwendungssystem kann dieses die ersten verschlüsselten Daten aus den Identifikationsdaten bilden. Vorzugsweise werden die ersten verschlüsselten Daten jedoch durch Verschlüsseln einer von dem OTP-Generator erzeugten Pseudozufallszahl mittels des ersten geheimen Schlüssels gebildet, die der OTP-Generator zusätzlich zu den Identifikationsdaten an das Anwendungssystem überträgt. Zu diesem Zweck kann der OTP-Generator einen Zufallsgenerator zum Erzeugen der Pseudozufallszahl umfassen.

Die erzeugte Pseudozufallszahl kann dann als Referenzdaten für einen späteren Vergleich mit Vergleichsdaten durch die Verifikationseinrichtung in dem Speicher gespeichert und auf der Anzeigeeinrichtung angezeigt werden. Die Verifikationseinrichtung des OTP-Generators vergleicht dann die von der Kryptographieeinrichtung entschlüsselten ersten verschlüsselten Daten als Vergleichsdaten mit in dem Speicher abgelegten Referenzdaten und sendet bei Übereinstimmung ein Verifikationssignal an die Kryptographieeinrichtung, welche erst bei Empfang dieses Verifikationssignals die ersten verschlüsselten Daten mittels des zweiten geheimen Schlüssels verschlüsselt.

Es ist aber auch möglich, dass die Verifikationseinheit den Vergleich der ersten verschlüsselten Daten mit den gespeicherten Referenzdaten durchführt, ohne dass die ersten verschlüsselten Daten dazu entschlüsselt worden sind. In diesem Fall repräsentieren die in dem Speicher gespeicherten Referenzdaten die ersten verschlüsselten Daten selbst, die der OTP-Generator zu Vergleichszwecken bilden kann, da er ja selbst auch im Besitz des ersten geheimen Schlüssels ist.

Der OTP-Generator ist in einer bevorzugten Ausführungsform als Chipkarte ausgebildet und ist als solche vom Nutzer stets einfach mitzuführen. Zusammen mit dem Anwendungssystem und einem mit diesem verbundenen Kommunikationsgerät, das in der geschilderten Weise mit dem OTP-Generator kommunizieren kann, bildet der OTP-Generator ein Personalisierungssystem, das den OTP-Generator in der oben beschriebenen Weise personalisiert.

Die Erfindung wird im Folgenden mit Bezug auf die begleitenden Zeichnungen beispielhaft erläutert. Darin zeigen:
- Figur 1: schematisch eine bevorzugte Ausführungsform eines erfindungsgemäßen OTP-Generators;
- Figur 2: schematisch Komponenten eines Personalsierungssystems; und
- Figur 3: schematisch die Schritte einer bevorzugten Ausführungsform des erfindungsgemäßen Personalisierungsverfahrens.

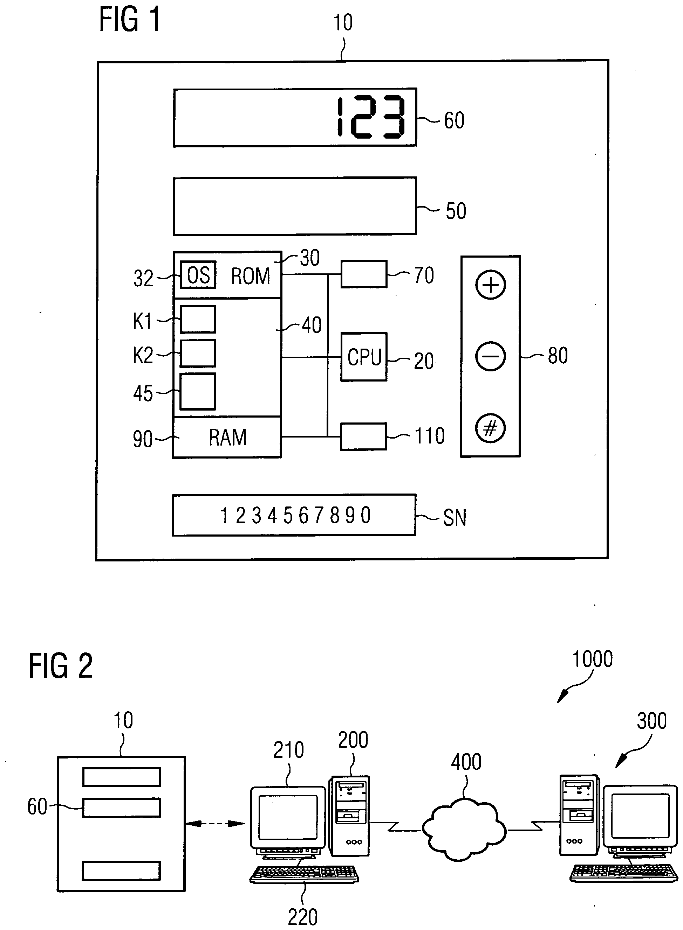

Mit Bezug auf Figur 1 umfasst ein OTP-Generator 10 einen Prozessor (CPU) 20, einen nichtflüchtigen, nicht wiederbeschreibaren ROM-Speicher 30, in dem der Kern des den OTP-Generator 10 steuernden Betriebssystems (OS) 32 gespeichert ist, einen nichtflüchtigen, wiederbeschreibbaren Speicher 40 und einen flüchtigen Arbeitsspeicher (RAM) 90. In dem Speicher 40 können Daten, wie z.B. die nachstehend beschriebenen geheimen Schlüssel K1 und K2, und Applikationen, wie z.B. die nachstehend beschriebene Verifikationsapplikation, gespeichert sein. Es ist auch möglich, die Schlüssel K1 und K2 und Applikationen in dem ROM-Speicher 30 zu speichern oder das Betriebssystem 32 oder zumindest Systemroutinen in dem Speicher 40. Ein zusätzlicher Kryptoprozessor dient einem effektiven Verschlüsseln und Entschlüsseln von Daten. Diese Aufgaben können auch durch eine Kryptographieapplikation, die in einem der Speicher 30 oder 40 gespeichert und auf dem Prozessor 20 ausführbar ist, ausgeführt werden.

Die geheimen Schlüssel K1 und K2 dienen zur verschlüsselten Kommunikation mit einem nachstehend beschriebenen Anwendungssystem. Es ist auch möglich, diese Kommunikation sicher nur mit einem geheimen Schlüssel K durchzuführen. Der geheime Schlüssel K2 (bzw. der eine geheime Schlüssel K) ist eindeutig dem OTP-Generator 10 zugeordnet. Keine zwei OTP-Generatoren verfügen über identische Schlüssel K2 (bzw. K). Der Schlüssel K2 dient dem OTP-Generator 10 im Wesentlichen dazu, sich gegenüber dem Anwendungssystem 300 zu authentisieren, indem er von dem Anwendungssystem 300 erhaltene Daten mit diesem Schlüssel K2 verschlüsselt und damit seine Identität über den Besitz des Schlüssels K2 eindeutig nachweist. Der geheime Schlüssel K1 hingegen kann für eine Mehrzahl von OTP-Generatoren 10 identisch eingesetzt werden, da er dem Anwendungssystem dient, sich in analoger Weise gegenüber einem solchen OTP-Generator zu authentisieren.

Die Kryptographieeinrichtung 70 nimmt Daten auf, die über eine optische Eingabeeinrichtung 50 ausgelesen worden sind. Solche Daten werden dann, je nach Anwendungszusammenhang, mittels des Schlüssels K1 entschlüsselt in dem Speicher 40 als Vergleichsdaten gespeichert und optional an eine Anzeigeeinrichtung 60 zum Anzeigen weitergegeben oder mittels des Schlüssels K2 erneut verschlüsselt und ebenfalls zum Anzeigen weitergeleitet. Die Kryptographieeinrichtung 70 kann weiterhin dazu dienen, OTP-Generatorinterne Daten zu verschlüsseln und als Referenzdaten in dem Speicher 40 zu speichern, beispielsweise Daten, die anschließend an ein Anwendungssystem gesendet werden sollen.

Die Verifikationsapplikation 45 vergleicht als Verifikationseinrichtung empfangene und gespeicherte Vergleichsdaten mit in dem Speicher 40 gespeicherten Referenzdaten. Vergleichsdaten sind dabei immer Daten, die von außen von einem anderen Kommunikationspartner kommend in den OTP-Generator 10, verschlüsselt oder im Klartext, eingebracht worden sind. Referenzdaten sind in der Regel Daten, die durch den OTP-Generator 10 selbst erzeugt worden sind. Auch diese können verschlüsselt oder im Klartext vorliegen.

Ein Verifikationsvorgang in dem OTP-Generator 10 folgt immer einem bestimmten Muster: Der OTP-Generator 10 stellt Daten bereit, die an ein Anwendungssystem gesendet werden sollen, beispielsweise eine Pseudozufallszahl RAND. Einem vorgeschriebenen Kommunikationsprotokoll folgend erwartet der OTP-Generator 10 als Antwort von dem Anwendungssystem, dass die gesendete Pseudozufallszahl RAND mittels des ersten Schlüssels K1 verschlüsselt an den OTP-Generator 10 zurückgesendet wird. Die auf diese Weise empfangenen Daten bilden Vergleichsdaten. Falls RAND selbst als Referenzdatum gespeichert worden ist, werden die empfangenen verschlüsselten Daten mittels der Kryptographieeinrichtung 70 und des Schlüssels K1 entschlüsselt und entschlüsselt als Vergleichsdaten gespeichert. Falls als Referenzdatum die mittels K1 verschlüsselte Pseudozufallszahl RAND gespeichert worden ist, werden die empfangenen Daten selbst als Vergleichsdaten gespeichert. In jedem der beiden Fälle kann die Verifikationsapplikation 45 durch Vergleichen der Vergleichsdaten mit den Referenzdaten eindeutig feststellen, ob der sich aktuell als das Anwendungssystem ausgebende Kommunikationspartner über den Schlüssel K1 verfügt, nämlich genau dann, wenn Vergleichsdaten und Referenzdaten übereinstimmen.

Um die Kommunikation mit dem Anwendungssystem gemäß dem vorbestimmten Protokoll fortzusetzen, werden die von dem Anwendungssystem empfangenen ersten verschlüsselten Daten mittels der Kryptographieeinrichtung 70 mittels des Schlüssels K2 verschlüsselt.. Die Verifikationseinrichtung 45 kann bei erfolgreicher Verifikation ein Verifikationssignal an die Kryptographieeinrichtung 70 senden, um diesen Verschlüsselungsprozess anzustoßen.

Die bereits erwähnte Anzeigeeinrichtung 60 des OTP-Generators 10 in Form eines Displays dient dem Anzeigen von Daten, die in einem der Speicher 30, 40 gespeichert sind, mittels eines der Prozessoren 20, 70 erzeugt oder über eine optische Eingabeeinrichtung 50 in den OTP-Generator 10 eingebracht worden sind. Die optische Eingabeeinrichtung 50 ist als CCD-Zeilensensor ausgebildet. Auch optisch eindimensionale Sensoren, beispielsweise Photodioden, sind zu diesem Zweck einsetzbar. Mittels der optischen Eingabeeinrichtung 50 können Daten, beispielsweise von einem Monitor eines externen Geräts, ausgelesen werden. Eine spezielle Kopplung des OTP-Generators 10 mit dem externen Gerät oder eine Installation des OTP-Generators 10 bei einem Betriebssystem des externen Geräts ist nicht notwendig. Es reicht aus, dass die optische Eingabeeinrichtung 50 räumlich geeignet in Relation zu dem Monitor des externen Geräts angeordnet wird, damit ein optisches Auslesen von Daten, die auf dem Monitor, beispielsweise als Laufschrift (Flashanimiert oder als dynamischer HTML-Inhalt), zum Auslesen für einen Zeilensensor, oder schlicht binär codiert in einem oder mehreren Hell-Dunkel gesteuerten Bereichen zum Auslesen für eine oder mehrere Photodioden, ausgegeben werden.

Der OTP-Generator 10 verfügt weiterhin optional über eine Tastatur 80 zum Erleichtern der Interaktion mit einem Nutzer. Beispielsweise kann der Nutzer mittels der Tastatur 80 das Erzeugen und Anzeigen einer Pseudozufallszahl RAND durch einen Zufallsgenerator 110 oder das Anzeigen von Identifikationsdaten des OTP-Generators auf der Anzeigeeinrichtung 60 initiieren. Der OTP-Generator 10 wird durch eine Seriennummer SN eindeutig identifiziert, die sichtbar äußerlich auf den OTP-Generator 10 aufgebracht worden ist, beispielsweise aufgedruckt oder eingeprägt.

Der OTP-Generator 10 ist in Form einer Chipkarte ausgebildet. Es ist auch möglich, eine andere Bauform zu wählen, beispielsweise als ein volumiges Token oder dergleichen.

Figur 2 stellt schematisch die Komponenten eines Personalisierungssystems 1000 dar. Der vorstehend beschriebene OTP-Generator 10 interagiert (gestrichelt dargestellt) mit einem Kommunikationsgerät 200, welches über eine Monitoreinrichtung 210 und eine Eingabeeinrichtung 220 verfügt. Das Kommunikationsgerät 200 kann beispielsweise ein PC sein mit einem Flüssigkristallmonitor als Monitoreinrichtung 210 und einer Tastatur als Eingabeeinrichtung 220. Aber beispielsweise auch ein Telekommunikationsendgerät mit einem Display und einer Tastatur ist als Kommunikationsgerät 200 einsetzbar.

Das Kommunikationsendgerät 200 ist mit einem Anwendungssystem 300 verbunden, beispielsweise über ein Netzwerk 400, z.B. dem Internet, oder über ein Mobilfunknetz, wobei der OTP-Generator 10 für einen Nutzer bei dem Anwendungssystem 300, beispielsweise einem Online-Banking-System, personalisiert wird.

Das Kommunikationsgerät 200 dient im Wesentlichen dazu, Daten des OTP-Generators 10, die für das Anwendungssystem 300 bestimmt sind, aufzunehmen und an das Anwendungssystem zu senden. Solche Daten können dem Kommunikationsgerät 200 über die Tastatur 220 bereitgestellt werden. Weiterhin empfängt das Kommunikationsgerät 200 Daten von dem Anwendungssystem 300, die für den OTP-Generator 10 bestimmt sind und zeigt diese mittels des Monitors 210 an. Von diesem Monitor 210 können die entsprechenden Daten wie vorstehend beschrieben durch den OTP-Generator 10 mittels der optischen Eingabeeinrichtung 50 ausgelesen werden.

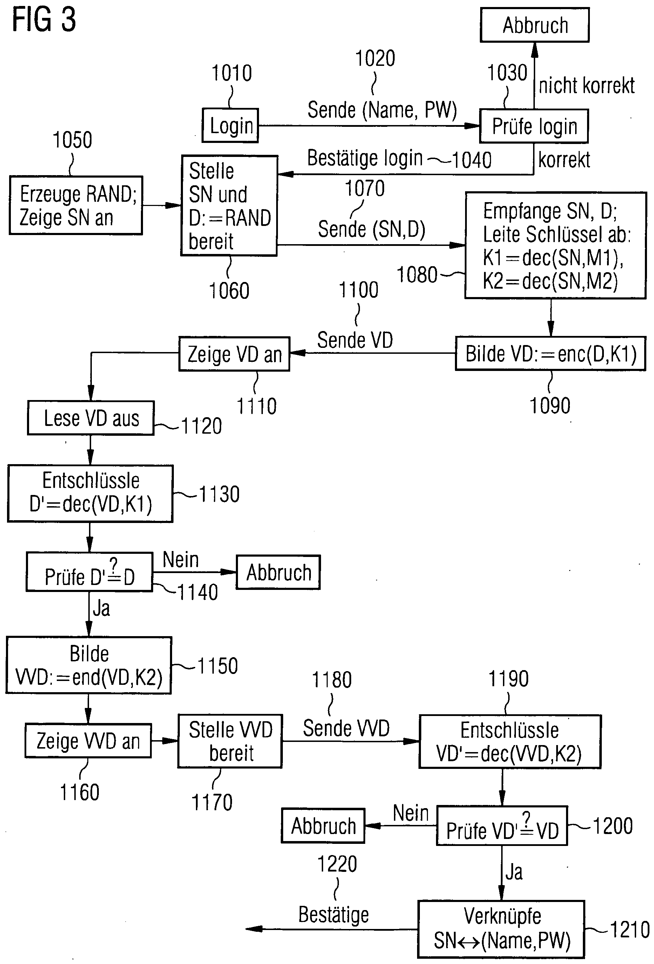

Eine bevorzugte Ausführungsform des Personalisierungsverfahrens ist in Figur 3 beschrieben. Ein Nutzer meldet sich in einem ersten Schritt 1010 bei dem Anwendungssystem 300 an, in dem er seine Kennungsdaten, beispielsweise Name und Passwort (PW), in Schritt 1020 an das Anwendungssystem 300 sendet, welches in Schritt 1030 diese Kennungsdaten mittels in dem Anwendungssystem 300 bereits vorliegenden Kennungsdaten vergleicht und bei Übereinstimmung in Schritt 1040 dem Nutzer ein korrektes Anmelden bestätigt.

Der OTP-Generator 10 erzeugt in Schritt 1050 eine Pseudozufallszahl RAND und zeigt als Identifikationsdaten eine Seriennummer SN an, die in Schritt 1060 dem Kommunikationsgerät 200 jeweils über die Tastatur 220 bereitgestellt werden und von diesem in Schritt 1070 als SN und D:= RAND an das Anwendungssystem 300 gesendet werden.

Dort empfangen leitet das Anwendungssystem 300 in Schritt 1080 aus der Seriennummer SN und mittels zweier dem Anwendungssystem 300 vorliegender geheimer Hauptschlüssel M1 und M2 die geheimen Schlüssel K1 und K2 ab und bildet anschließend in Schritt 1090 mittels K1 erste verschlüsselte Daten VD und sendet diese in Schritt 1100 an das Kommunikationsgerät 200.

Das Kommunikationsgerät 200 zeigt die empfangenen ersten verschlüsselten Daten VD mittels der Monitoreinrichtung 210 in Schritt 1110 an, von wo aus diese Daten von dem OTP-Generator 10 mittels der optischen Eingabeeinrichtung 50 in Schritt 1120 ausgelesen werden.

Der OTP-Generator 10 verifiziert die empfangenen ersten verschlüsselten Daten VD, indem diese in Schritt 1130 durch die Kryptographieeinrichtung 70 mittels des Schlüssels K1 zu D' entschlüsselt werden. Optional können diese Daten D' zur nochmaligen Prüfung durch den Nutzer auf der Anzeigeeinrichtung 60 angezeigt werden. Die Verifikationsapplikation 45 vergleicht in Schritt 1140 nun D' mit der zuvor als Referenzdatum D (also der Pseudozufallszahl RAND) gespeicherten Daten.

Bei Gleichheit bildet die Kryptographieeinrichtung 70 in Schritt 1150 zweite verschlüsselte Daten VVD, indem die ersten verschlüsselten Daten VD mittels des Schlüssels K2 verschlüsselt werden. Diese Daten VVD werden mittels der Anzeigeeinrichtung in Schritt 1160 angezeigt und in Schritt 1170 dem Kommunikationssystem 200 über die Tastatur 220 bereitgestellt und von diesem in Schritt 1180 an das Anwendungssystem 300 gesendet.

Zur Verifikation entschlüsselt das Anwendungssystem 300 in Schritt 1190 die empfangenen zweiten verschlüsselten Daten VVD mittels des Schlüssels K2 zu VD' und prüft in Schritt 1200, ob die derart erhaltenen Daten VD' mit den in Schritt 1090 berechneten und gespeicherten Daten VD übereinstimmen.

Ist dies der Fall, werden die Kennungsdaten (Name, PW) des Nutzers in Schritt 1210 mit den Identifikationsdaten SN des OTP-Generators 10 verknüpft, wodurch der OTP-Generator 10 für den Nutzer bei dem Anwendungssystem 300 personalisiert ist. In Schritt 1220 sendet das Anwendungssystem 300 eine Bestätigungsnachricht, um den Nutzer über die erfolgreiche Personalisierung zu informieren.

## Patentansprüche

1. OTP-Generator (10) zum Erzeugen von Einmalpasswörtern, umfassend einen Prozessor (20), einen Speicher (40) mit zumindest einem ersten und einem zweiten geheimen Schlüssel (K1; K2), eine optische Eingabeeinrichtung (50) zum Auslesen von auf einer Monitoreinrichtung (210) angezeigten Daten, eine Anzeigeeinrichtung (60) zum Anzeigen von Daten, eine Verifikationseinrichtung (45) zum Vergleichen von Vergleichsdaten mit in dem Speicher (40) vorliegenden Referenzdaten und eine Kryptographieeinrichtung (70) zum Verschlüsseln und Entschlüsseln von Daten mittels des ersten und des zweiten geheimen Schlüssels (K1; K2), wobei die Kryptographieeinrichtung (70) eingerichtet ist, von der optischen Eingabeeinrichtung (50) aufgenommene erste verschlüsselte Daten (VD) einerseits mittels des ersten geheimen Schlüssels (K1) zu entschlüsseln und als Vergleichsdaten in dem Speicher (40) abzulegen und andererseits mittels des zweiten geheimen Schlüssels (K2) zu verschlüsseln, um zweite verschlüsselte Daten (VVD) zum Anzeigen auf der Anzeigeeinrichtung (60) zu bilden,
wobei in dem Speicher (40) den OTP-Generator (10) identifizierende Identifikationsdaten (SN) liegen und die Anzeigeeinrichtung (60) eingerichtet ist, die Identifikationsdaten (SN) anzuzeigen,
und einen Zufallsgenerator (110), der eingerichtet ist, eine Pseudozufallszahl (D; RAND) zu erzeugen und als Referenzdaten in dem Speicher (40) abzulegen, wobei die Anzeigeeinrichtung (60) eingerichtet ist, die Pseudozufallszahl (D, RAND) anzuzeigen,
**dadurch gekennzeichnet, dass** die Verifikationseinrichtung (45) eingerichtet ist, die von der Kryptographieeinrichtung (70) entschlüsselten Daten, die durch Entschlüsseln der mittels des ersten geheimen Schlüssels (K1) verschlüsselten Pseudozufallszahl (D; RAND) entstanden sind, als Vergleichsdaten mit der in dem Speicher (40) gespeicherten Pseudozufallszahl (D; RAND) als Referenzdaten zu vergleichen und bei Übereinstimmung ein Verifikationssignal an die Kryptographieeinrichtung (70) zu senden, und dass die Kryptographieeinrichtung (70) eingerichtet ist, die ersten verschlüsselten Daten (VD) erst bei Empfang des Verifikationssignals mittels des zweiten geheimen Schlüssels (K2) zu verschlüsseln.

2. OTP-Generator (10) nach Anspruch 1, **dadurch gekennzeichnet, dass** die optische Eingabeeinrichtung (50) ein CCD-Zeilensensor oder ein optisch eindimensionaler Sensor ist.

3. OTP-Generator (10) nach einem der Ansprüche 1 bis 2, **dadurch gekennzeichnet, dass** der zweite geheime Schlüssel (K2) ein eindeutig nur dem OTP-Generator (10) zuzuordnender kryptographischer Schlüssel ist.

4. OTP-Generator (10) nach einem der Ansprüche 1 bis 3, **dadurch gekennzeichnet, dass** der OTP-Generator (10) eine Chipkarte ist.

## Claims

1. An OTP generator (10) for generating one-time passwords, including a processor (20), a memory (40) with at least one first and one second secret key (K1; K2), an optical input device (50) for reading data displayed on a monitor device (210), a display device (60) for displaying data, a verification device (45) for comparing comparative data with reference data present in the memory (40) and a cryptographic device (70) for encrypting and decrypting data by means of the first and the second secret key (K1; K2), wherein the cryptographic device (70) is adapted on the one hand to decrypt by means of the first secret key (K1) first encrypted data (VD) recorded by the optical input device (50) and store said data as comparative data in the memory (40), and on the other hand to encrypt said data by means of the second secret key (K2) in order to form second encrypted data (WD) for displaying on the display device (60),
wherein in the memory (40) identification data (SN) are present which identify the OTP generator (10) and the display device (60) is adapted to display the identification data (SN),
and a random generator (110) which is adapted to generate and store as reference data in the memory (40) a pseudo random number (D; RAND), wherein the display device (60) is adapted to display the pseudo random number (D; RAND),
**characterized in that** the verification device (45) is adapted to compare as comparative data the data decrypted by the cryptographic device (70), which have been created through decryption of the pseudo random number (D; RAND) encrypted by means of the first secret key (K1), with the pseudo random number (D; RAND) stored in the memory (40) as reference data, and, in the case of a match, to send a verification signal to the cryptographic device (70), and that the cryptographic device (70) is adapted to encrypt the first encrypted data (VD) by means of the second secret key (K2) only upon receipt of the verification signal.

2. The OTP generator (10) according to claim 1, **characterized in that** the optical input device (50) is a CCD line sensor or an optically one-dimensional sensor.

3. The OTP generator (10) according to any of claims 1 to 2, **characterized in that** the second secret key (K2) is a cryptographic key that is uniquely allocatable only to the OTP generator (10).

4. The OTP generator (10) according to any of claims 1 to 3, **characterized in that** the OTP generator (10) is a chip card.

## Revendications

1. Générateur OTP (10) destiné à générer des mots de passe uniques, comprenant un processeur (20), une mémoire (40) ayant au moins une première et une deuxième clé secrète (K1; K2), un dispositif optique d'entrée (50) pour la lecture de données affichées sur un dispositif d'écran (210), un dispositif d'affichage (60) pour l'affichage de données, un dispositif de vérification (45) pour la comparaison de données de comparaison avec des données de référence se trouvant dans la mémoire (40), et un dispositif de cryptographie (70) pour le chiffrement et le déchiffrement de données au moyen de la première et de la deuxième clé secrète (K1; K2), cependant que le dispositif de cryptographie (70) est conçu pour, d'une part, déchiffrer au moyen de la première clé secrète (K1) des premières données chiffrées (VD) enregistrées par le dispositif optique d'entrée (50) et les stocker dans la mémoire (40) en tant que données de comparaison, et pour, d'autre part, les chiffrer au moyen de la deuxième clé secrète (K2) afin de constituer des deuxièmes données chiffrées (VVD) pour affichage sur le dispositif d'affichage (60),
cependant que, dans la mémoire (40), se trouvent des données d'identification (SN) identifiant le générateur OTP (10), et que le dispositif d'affichage (60) est conçu pour afficher les données d'identification (SN),
et un générateur aléatoire (110) conçu pour générer un nombre pseudo-aléatoire (D; RAND) et le stocker en tant que données de référence dans la mémoire (40), cependant que le dispositif d'affichage (60) est conçu pour afficher le nombre pseudo-aléatoire (D, RAND),
**caractérisé en ce que** le dispositif de vérification (45) est conçu pour comparer les données déchiffrées par le dispositif de cryptographie (70), qui ont été engendrées par déchiffrement du nombre pseudo-aléatoire (D; RAND) chiffré au moyen de la première clé secrète (K1), en tant que données de comparaison avec le nombre pseudo-aléatoire (D; RAND) mémorisé dans la mémoire (40) en tant que données de référence, et pour, en cas de concordance, envoyer un signal de vérification au dispositif de cryptographie (70), et **en ce que** le dispositif de cryptographie (70) est conçu pour ne chiffrer les premières données chiffrées (VD) au moyen de la deuxième clé secrète (K2) qu'au moment de la réception du signal de vérification.

2. Générateur OTP (10) selon la revendication 1, **caractérisé en ce que** le dispositif optique ' d'entrée (50) est un capteur linéaire CCD ou un capteur optiquement unidimensionnel.

3. Générateur OTP (10) selon une des revendications de 1 à 2, **caractérisé en ce que** la deuxième clé secrète (K2) est une clé cryptographique ne pouvant être univoquement affectée qu'au générateur OTP (10).

4. Générateur OTP (10) selon une des revendications de 1 à 3, **caractérisé en ce que** le générateur OTP (10) est une carte à puce.
